# EUROPÄISCHE PATENTSCHRIFT

(11) **EP 2 936 015 B1**
(45) Veröffentlichungstag und Bekanntmachung des Hinweises auf die Patenterteilung: **12.04.2017**
(21) Anmeldenummer: 13805366.5
(22) Anmeldetag: 13.12.2013
(51) Int. Cl.: F25D 23/02

(54) **TÜR FÜR EIN HAUSHALTSKÄLTEGERÄT MIT EINER VERTIEFUNG AN EINER AUSSENSEITE EINES VAKUUMISOLATIONSELEMENTS SOWIE HAUSHALTSKÄLTEGERÄT MIT EINER DERARTIGEN TÜR**
DOOR FOR A HOUSEHOLD REFRIGERATION APPLIANCE COMPRISING A RECESS ON AN OUTER SIDE OF A VACUUM INSULATION ELEMENT, AND HOUSEHOLD REFRIGERATION APPLIANCE COMPRISING SAID TYPE OF DOOR
PORTE POUR UN APPAREIL DE FROID MÉNAGER POURVUE D'UN RENFONCEMENT SUR UNE FACE EXTERNE D'UN ÉLÉMENT ISOLANT SOUS VIDE, ET APPAREIL DE FROID MÉNAGER POURVU D'UNE TELLE PORTE

(30) Priorität: 18.12.2012 DE 102012223546
(43) Veröffentlichungstag der Anmeldung: 28.10.2015
(73) Patentinhaber: BSH Hausgeräte GmbH, 81739 München (DE)
(72) Erfinder: EHNINGER, Christian, 89537 Giengen an der Brenz (DE); GÖRZ, Alexander, 73432 Aalen (DE); SEELMEIER, Michael, 73572 Heuchlingen (DE)
(86) Internationale Anmeldenummer: PCT/EP2013/076559
(87) Internationale Veröffentlichungsnummer: WO 2014/095642

(56) Entgegenhaltungen:
- EP-A1- 1 510 747
- JP-A- 2012 211 721

## Beschreibung

Die Erfindung betrifft eine Tür für ein Haushaltskältegerät mit zumindest einem Vakuumisolationselement, welches eine Hülle aufweist, die einen evakuierten Hohlraum umschließt. Der Hohlraum ist zumindest bereichsweise mit einem Stützkörper gefüllt, wobei die Hülle zumindest eine Vertiefung aufweist, in welcher zumindest ein Funktionsbauteil angeordnet ist. Des Weiteren betrifft die Erfindung ein Haushaltskältegerät mit einer Tür.

Bei Haushaltskältegeräten, wie beispielsweise einem Kühlgerät oder einem Gefriergerät oder einem Kühl-Gefrier-Kombigerät wird ein Innenraum, in dem Kältegut in Form von Lebensmitteln, die Speisen und Getränke umfassen, durch Wandungen begrenzt. Dazu kann ein Innenbehälter vorgesehen sein, der frontseitig eine Öffnung aufweist, die durch eine Tür verschließbar ist. Auch die Tür stellt in dem Zusammenhang eine Wandung dar.

Die thermischen Isolationskörper können in unterschiedlicher Ausgestaltung vorgesehen sein. So ist bekannt, dass ein Isolationsschaum vorgesehen ist. Ebenso sind bei neueren Ausgestaltungen Vakuumisolationselemente bekannt. So ist beispielsweise aus der WO 2012/031885 A2 ein Gehäuse für ein Kältegerät bekannt, bei dem ein Isolationskörper durch eine äußere und eine innere Schale begrenzt ist und in einem Zwischenraum zwischen den Schalen eine Isolationsmaterialpackung angeordnet ist. Das Isolationsmaterial kann beispielsweise ein hochporöser Feststoff sein.

Aus der DE 10 2009 002 800 A1 ist ein Haushaltskältegerät und eine wärmeisolierende Wandung dafür bekannt. Bei dieser Ausgestaltung kann der Isolationskörper zwei Schalen bzw. Häute aufweisen, zwischen denen wiederum ein Hohlraum ausgebildet ist, der evakuiert sein kann. Bei einer Ausführung kann vorgesehen sein, dass eine Haut dieses Isolationskörpers selbst einen eckigen Rahmen aufweist, an dem dann eine plattenartige Innenhaut und eine Außenhaut befestigt sind, so dass dadurch eine Gesamthülle für den Isolationskörper gebildet ist.

Ferner beschreibt die JP 2012 211721 A einen Kühlschrank, welcher eine Tür mit einem Vakuumisolationselement aufweist. An der Außenseite der Tür ist ein Frontteil angebracht, welches aus Glas gebildet ist. Ferner ist es vorgesehen, dass das Vakuumisolationselement eine Vertiefung aufweist, in welche beispielsweise ein Funktionselement eingebracht werden kann.

Aus der EP 1 510 747 A1 ist ein thermisches Vakuumisolationsmaterial sowie ein Kältegerät mit einem solchen Material bekannt.

Bei derartigen plattenartigen Isolationskörpern ist die Positionierung und Befestigung schwierig. In dem Zusammenhang kann ein vollflächiges Ankleben beispielsweise an einem Innenbehälter oder aber auch an einer Innenseite des Außenbehälters vorgesehen sein. Beispielsweise kann der Außenbehälter dann eine äußere Gehäusewand bilden, die den Innenbehälter umgibt. Der Zwischenraum zwischen dem Innenbehälter und dem Außenbehälter kann zusätzlich dann noch mit einem thermisch isolierenden Schaummaterial ausgefüllt sein.

Gerade bei einer Tür ist ein derartiger Aufbau jedoch montageintensiv und die Tür durch die Vielzahl der Komponenten auch relativ dick gestaltet. Dadurch wird entweder das Gerät vergrößert oder ein Nutzvolumen des Innenraums verkleinert.

Es ist Aufgabe der vorliegenden Erfindung, eine Tür für ein Haushaltskältegerät sowie ein derartiges Gerät zu schaffen, welche bzw. welches bei kompaktem Aufbau des Vakuumisolationselements multifunktionell ausgebildet ist.

Diese Aufgabe wird durch eine Tür und ein Haushaltskältegerät gemäß den unabhängigen Ansprüchen gelöst.

Eine erfindungsgemäße Tür für ein Haushaltskältegerät umfasst ein Vakuumisolationselement, welches eine Hülle aufweist. Die Hülle umschließt einen evakuierten Hohlraum, welcher zumindest teilweise mit einem Stützkörper gefüllt ist. Die Hülle weist zumindest eine Vertiefung auf, in welche zumindest ein Funktionsbauteil angeordnet ist. Ein wesentlicher Gedanke der Erfindung ist darin zu sehen, dass zumindest eine Vertiefung an einer einem Frontteil der Tür zugewandten Außenseite des Vakuumisolationselements ausgebildet ist. Durch diese Ausgestaltung können ein oder mehrere Funktionsbauteile einer ganz spezifischen Seite des Vakuumisolationselements angeordnet werden und sind somit auch entsprechend eingebettet und versenkt angeordnet. Das Vakuumisolationselement ist somit multifunktionell gestaltet, da es neben seiner thermischen Isolationswirkung auch als Träger für weitere Bauteile dient. Durch die Anbringung dieser Funktionsbauteile in einer örtlich spezifizierten Vertiefung, nämlich an der Außenseite des Vakuumisolationselements, kann auch bei geschlossener Tür bei spezifischen Funktionsbauteilen und Ausgestaltungen die Zugänglichkeit und/oder Betrachtung ermöglicht sein. Darüber hinaus ist die Vertiefung somit auch beabstandet zum mit der Tür verschließbaren Innenraum angeordnet, so dass dort keine unerwünschten großen Unebenheiten und Reduktionen der Dicke des Vakuumisolationselements zum Innenraum hin auftreten.

Die zumindest eine Vertiefung ist als sogenanntes Sackloch ausgebildet und somit eine nicht durchgängige Einbuchtung.

Dadurch werden die oben genannten Vorteile begünstigt. Die Aufnahme des Funktionsbauteils ist dadurch auch verbessert und entsprechend kann ein Halten in der Vertiefung stabiler erfolgen. Ein Hindurchrutschen durch eine durchgängige Öffnung ist nicht mehr möglich und somit dient quasi der Boden der Vertiefung auch als rückseitiger Anschlag für das Funktionsbauteil.

Des Weiteren ist durch eine derartige Ausgestaltung die durchgängige flächige thermische Isolation nicht unterbrochen.

Das Funktionsbauteil kann ein Halteelement sein. Ebenso kann eine elektronische Kommunikationsschnittstelle zur drahtlosen Kommunikation und somit zum Signalaustausch vorgesehen sein.

Beispielsweise können als Funktionsbauteil Magnete zur Befestigungshilfe für außenseitig am Vakuumisolationselement anbringbaren Komponenten sein. Beispielsweise können hier Permanentmagnete vorgesehen sein. In dem Zusammenhang ist es möglich, dass ein Türaußenteil, beispielsweise ein Türaußenblech, welches den frontseitigen Abschluss der Tür bildet und somit auch das Frontteil darstellt, durch diese Magnete über die Magnetkraft an dem Vakuumisolationselement gehalten werden.
Vorzugsweise ist vorgesehen, dass auch Steuerelemente als Funktionsbauteile vorgesehen sein können, die beispielsweise eine Elektronik oder mechanische Regler für die Steuerung oder Regelung der Gerätefunktion sein können. Bezüglich der bereits genannten elektronischen Kommunikationsschnittstelle kann dies beispielsweise eine Bluetooth- oder eine WiFi- oder eine NFC- oder eine RFID- oder eine anderweitige Funkschnittstelle sein.

Das Funktionsbauteil kann jedoch auch eine Energiequelle, beispielsweise eine Batterie, sein.

Vorzugsweise sind Wände, die die Vertiefung begrenzen, an einer Innenschale und/oder einer Außenschale des Vakuumisolationselements angeordnet, insbesondere einstückig damit verbunden bzw. daran angeformt. Durch eine derartige Ausgestaltung kann die Vertiefung einerseits positionssicher und mechanisch stabil gestaltet werden. Die Aufnahme von auch relativ schweren Funktionsbauteilen ist dann ohne ein Verbiegen der Wände der Vertiefung erreicht, so dass auch hier keine unerwünschten Verformungen oder Beschädigungen auftreten.

Darüber hinaus sind die Herstellung und die Montage einer derartigen Vertiefung mit einer Innenschale und/oder einer Außenschale vereinfacht.

Erfindungsgemäß ist das Frontteil eine Abdeckung, wie ein Türaußenteil, insbesondere ein Außenblech.

Erfindungsgemäß ist die Tür als Vollvakuumtür ausgebildet. Dies bedeutet, dass die Tür außer zumindest einem Vakuumisolationselement keinen weiteren thermisch isolierenden Schaum aufweist, der das Vakuumisolationselement zumindest bereichsweise umgibt. Durch eine derartige Ausgestaltung einer Vollvakuumtür wird bei zumindest gleichbleibender thermischer Isolationswirkung eine kompaktere Tür, insbesondere eine dünnere Tür, ermöglicht. Dadurch kann das Nutzvolumen des Innenraums, welcher mit der Tür verschließbar ist, vergrößert werden.

Durch die Tür mit dem an einer spezifischen Stelle einer Vertiefung versehenen Vakuumisolationselement kann dieses ohne expliziten durchgängigen Durchbruch ausgebildet werden und dennoch die Aufnahme von Funktionsbauteilen umfänglich ermöglichen, die insbesondere frontseitig und somit auch bei geschlossener Tür zugänglich sind. Auch dann, wenn erfindungsgemäß das Frontteil diese Vertiefung vollständig abdeckt und dennoch dieses Frontteil zerstörungsfrei lösbar mit dem Vakuumisolationselement verbunden ist, kann auch hier der oben genannte Vorteil erreicht werden.

Alle Elemente sind nach Demontage der Tür frei zugänglich und können einfach repariert und ausgetauscht werden.

Des Weiteren betrifft die Erfindung ein Haushaltskältegerät mit einer erfindungsgemäßen Tür und einer vorteilhaften Ausgestaltung davon. Die Tür ist zum Verschließen eines Innenraums des Haushaltskältegeräts angeordnet, wobei das Frontteil dem Innenraum abgewandt angeordnet ist. Der Innenraum ist zur Aufnahme von Lebensmitteln, wie Speisen und Getränke, ausgebildet. Das Haushaltskältegerät kann beispielsweise ein Kühlgerät oder ein Gefriergerät oder ein Kühl-Gefrier-Kombigerät sein.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts;
- Fig. 2: eine perspektivische Ansicht von hinten einer als Tür ausgebildeten Wandung des Haushaltskältegeräts gemäß Fig. 1;
- Fig. 3: eine Explosionsdarstellung des Ausführungsbeispiels der Tür gemäß Fig. 2;
- Fig. 4: einen perspektivische Darstellung auf eine Front einer Ausführung einer Tür; und
- Fig. 5: eine Teildarstellung von Fig. 4.

In den Figuren werden gleiche oder funktionsgleiche Elemente mit den gleichen Bezugszeichen versehen.

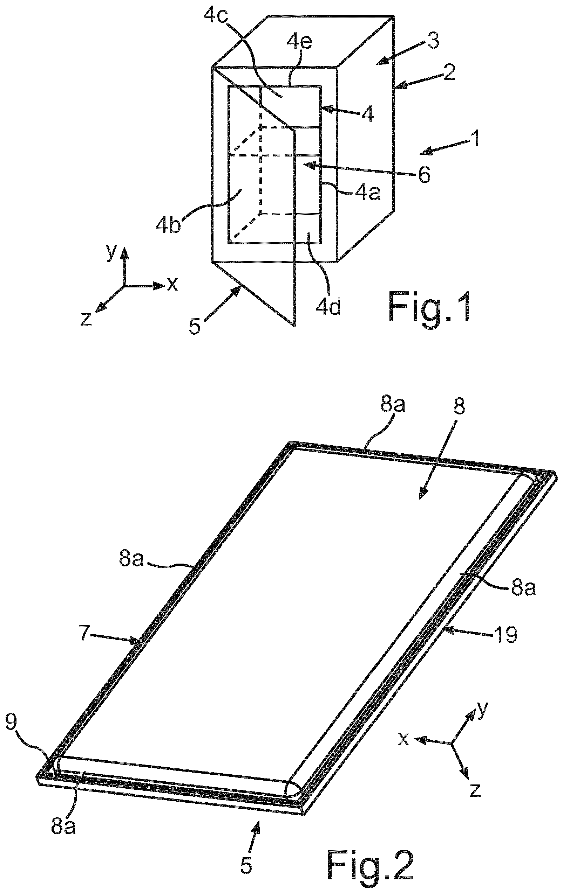

In Fig. 1 ist in einer perspektivischen Darstellung ein Haushaltskältegerät 1 gezeigt, welches zur Aufnahme von Lebensmitteln, wie beispielsweise Getränken und Speisen, ausgebildet ist. Das Haushaltskältegerät 1 kann beispielsweise ein Kühlgerät oder ein Gefriergerät oder ein Kühl-Gefrier-Kombigerät sein.

Das Haushaltskältegerät 1 umfasst ein Gehäuse 2, welches ein Außengehäuse bzw. einem Außenbehälter 3 und ein darin angeordnetes Innengehäuse umfasst, welches ein Innenbehälter 4 ist. Der Außenbehälter 3 umgibt den Innenbehälter 4, wobei beide frontseitig eine Beschickungsöffnung aufweisen, die durch eine Tür 5 verschließbar ist. Der Innenbehälter 4 begrenzt mit seitlichen Wänden bzw. seitlichen Wandungen 4a und 4b sowie einer Rückwand bzw. einer hinteren Wandung 4c, sowie einer Bodenwandung 4d und einer Deckenwandung 4e einen Innenraum 6. Abhängig davon, wie das Haushaltskältegerät 1 ausgebildet ist, kann dieser Innenraum vollständig ein Kühlfach sein oder ein No-Frost-Fach umfassen, oder ein Gefrierfach sein. Es kann auch vorgesehen sein, dass das Haushaltskältegerät 1 als Innenraum 6 ein Kühlfach aufweist, in dem innenliegend ein Gefrierfach integriert ist, welches insbesondere dann durch eine weitere eigene Gefrierfach-Tür verschließbar ist.

Im Ausführungsbeispiel ist vorgesehen, dass die Tür 5 zum Verschließen des Innenraums 6 eine Vakuumisolationstür, nämlich eine Vollvakuumtür, ist. Dazu ist vorgesehen, dass die Tür 5 zumindest ein Vakuumisolationselement, welches einen thermischen Isolationskörper darstellt, aufweist. Die Tür 5 stellt darüber hinaus ebenfalls eine Wandung des Haushaltskältegeräts 1 dar.

In Fig. 2 ist in einer perspektivischen Ansicht auch eine Innenseite 7 der Tür 5 mit dem Vakuumisolationselement 8 dargestellt. Die Tür 5 umfasst neben dem plattenartigen rechteckigen Vakuumisolationselement 8 einen Trägerrahmen 9. Der Trägerrahmen 9 umgreift umfangsseitig das Vakuumisolationselement 8 vollständig. Das Vakuumisolationselement 8 ist somit von dem Trägerrahmen 9 gehalten.

Der Trägerrahmen 9 ist ebenfalls rechteckig gestaltet und mehrteilig ausgebildet. Ebenso denkbar ist eine einstückige Ausbildung des Trägerrahmens 9.

Der Trägerrahmen 9 ist darüber hinaus aus Kunststoff ausgebildet und insbesondere als Spritzgussteil realisiert. Es kann vorgesehen sein, dass der Trägerrahmen 9 aus einem einzigen Kunststoffmaterial oder aus zumindest zwei unterschiedlichen Kunststoffmaterialien ausgebildet ist.

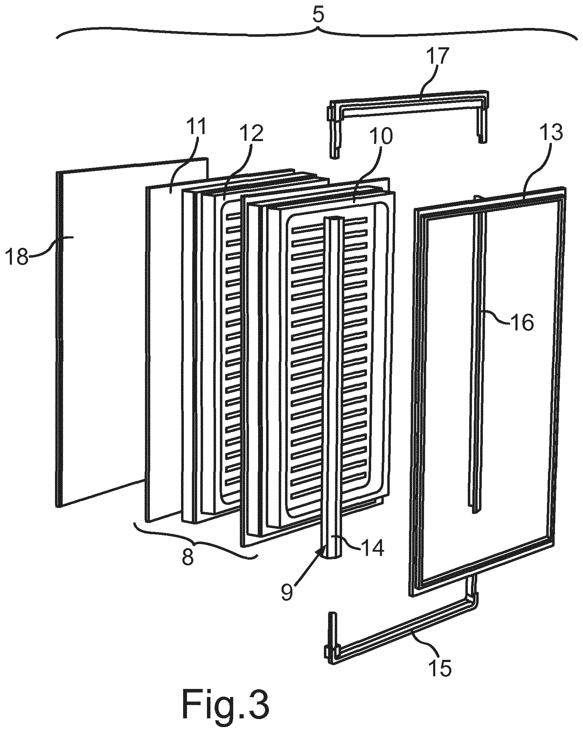

In Fig. 3 ist in einer Explosionsdarstellung die Tür 5 gezeigt.

Es ist dabei zu erkennen, dass das Vakuumisolationselement 8 eine hintere bzw. Innenschale 10 aufweist, die einstückig aus Kunststoff ausgebildet ist. Darüber hinaus umfasst das Vakuumisolationselement 8 eine vordere Schale bzw. eine Außenschale 11, welche ebenfalls einstückig aus Kunststoff ausgebildet ist. Im zusammengesetzten Zustand des Vakuumisolationselements 8 sind die beiden Schalen 10 und 11 miteinander verbunden. Beispielsweise kann hier ein Verkleben oder Verschweißen vorgesehen sein. In dem zwischen den Schalen 10 und 11 gebildeten Zwischenraum bzw. Hohlraum ist ein Füllkörper bzw. Stützkörper 12 eingebracht. Beispielsweise kann hier ein poröser Festkörper vorgesehen sein. In bevorzugter Weise ist Kieselsäure als Füllmaterial vorgesehen. Dieser Zwischenraum zwischen den Schalen 10 und 11 ist evakuiert.

Darüber hinaus ist in Fig. 3 eine umlaufende Dichtung 13 gezeigt, die im zusammengesetzten Zustand an dem Trägerrahmen 9 angeordnet ist. Der Trägerrahmen 9 ist somit multifunktionell gestaltet und zur Aufnahme mehrerer unterschiedlicher separater gegenständlicher Komponenten vorgesehen. Neben der Dichtung 13 kann darüber hinaus jedoch auch noch ein anderes Funktionsbauteil zusätzlich an dem Trägerrahmen 9 angeordnet sein. Beispielsweise können hier ein Scharnier und/oder eine Lagereinheit und/oder ein Versteifungsteil vorgesehen sein.

Im Ausführungsbeispiel umfasst der Trägerrahmen 9 durch seine rechteckige Formgebung vier Trägerrahmenteile 14, 15, 16 und 17. Die beiden Trägerrahmenteile 14 und 16, welche geradlinige längliche Bauteile sind, erstrecken sich vertikal und parallel. Ebenso erstrecken sich die horizontal angeordneten Trägerrahmenteile 15 und 17 parallel zueinander.

Eine alternativ ebenso mögliche, einstückige Ausgestaltung des Trägerrahmens 9 ist insbesondere durch die während eines einzigen Herstellungsprozesses ausgebildete Form gestaltet. Es werden somit insbesondere keine Ausgestaltungen unter einer Einstückigkeit verstanden, die zunächst das Herstellen separater Trägerrahmenteile umfasst, die dann nachfolgend beispielsweise miteinander verklebt werden oder dergleichen.

Die Tür 5 umfasst darüber hinaus eine außenseitige bzw. frontseitige Abdeckung 18, die beispielweise ein plattenartiges Außenblech ist.

In zumindest einem der Trägerrahmenteile 14 bis 17 kann auch integriert und somit innenliegend ein metallisches Versteifungsteil eingebettet sein. Insbesondere ist diese Integration derart, dass das metallische Versteifungsteil vollständig von dem Kunststoffmaterial des Trägerrahmenteils 14 bis 17 umschlossen ist.

In Fig. 2 und Fig. 3 wird eine Hülle 19 der Tür 5 durch die Schalen 10 und 11 gebildet.

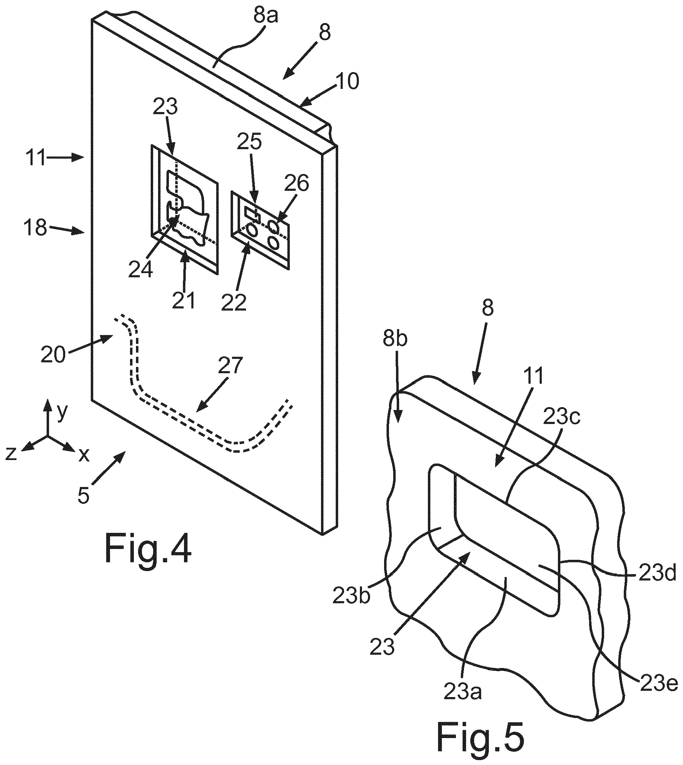

In Fig. 4 ist in einer perspektivischen Darstellung die Tür 5 nicht von der Rückseite 7, wie sie in Fig. 2 dargestellt ist, sondern von einer Frontseite bzw. auf eine Frontseite 20 gesehen dargestellt.

Es ist gemäß der Darstellung in Fig. 4 zu erkennen, dass das die Tür 5 frontseitig abschließende Frontteil bzw. Außenblech bzw. die Abdeckung 18 eine Aussparung 21 aufweist. Diese Aussparung 21 ist durch dieses Frontteil bzw. die Abdeckung 18 durchgängig. Im Ausführungsbeispiel benachbart dazu ist eine zumindest zweite Aussparung 22 ausgebildet. Auch diese ist durchgängig. Das Vakuumisolationselement 8 umfasst auf einer Außenseite 8b (Fig. 5), welche der Abdeckung 18 zugewandt ist, eine sacklochförmige Vertiefung 23. Diese nach vorne hin offene Einbuchtung ist zur Aufnahme eines Funktionsbauteils ausgebildet. Die Vertiefung 23 ist unmittelbar hinter der Aussparung 21 angeordnet. Im Ausführungsbeispiel ist hier vorgesehen, dass das Funktionsbauteil 24 eine Wasser- und/oder Eisspendereinheit ist. Diese ist frontseitig und somit über die Frontseite 20 der Tür 5 zugänglich und durch einen Nutzer betätigbar. Hinter der Aussparung 22 ist eine weitere Vertiefung 25 in dem Vakuumisolationselement 8, insbesondere der Außenschale 11 ausgebildet. In dieser Vertiefung 25, die ebenfalls sacklochartig ausgebildet ist, ist im Ausführungsbeispiel eine Anzeige- und Bedieneinrichtung als weiteres Funktionsbauteil 26 angeordnet. Es kann vorgesehen sein, dass zumindest eine der beiden Vertiefungen 23 und 25 durch eine nicht dargestellte transparente Abdeckung bereichsweise abgedeckt sind. Es kann dies beispielsweise im Bereich des Anzeigefelds der Anzeige- und Bedieneinrichtung vorgesehen sein. Es kann auch vorgesehen sein, dass eine derartige transparente Abdeckung bewegbar an der Abdeckung 18 angeordnet ist, so dass im nicht benötigten Zustand das jeweilige Funktionsbauteil frontseitig abgedeckt und nicht zugänglich positioniert werden kann. Im benötigten Zustand kann dann die nur die Vertiefung 23 oder 25 bedeckende Abdeckung abgenommen oder geöffnet werden. Die Vertiefungs-Abdeckung kann in dem Zusammenhang transparent sein, sie kann jedoch in Materialausgestaltung und Farbe an die Frontseite 20 angepasst sein. Dadurch kann im geschlossenen Zustand der Abdeckung eine beruhigte Frontfläche der Tür 5 gestaltet werden.

Bei anderen Ausführungen und anderen Funktionsbauteilen kann vorgesehen sein, dass eine derartige Vertiefung durch eine zerstörungsfrei unlösbar angeordnete transparente Abdeckung abgedeckt ist, wenn eine direkte Zugänglichkeit durch einen Nutzer zum Betätigen und/oder Entnehmen des dahinter angeordneten Funktionsbauteils nicht erforderlich ist.

Des Weiteren ist in Fig. 4 durch die strichlierte Darstellung eine weitere Vertiefung 27 gezeigt, die in der Außenschale 11 ausgebildet ist. In dieser Vertiefung 27 kann als Funktionsbauteil eine elektrische Signalleitung und/oder eine Schlauch- oder Rohrleitung angeordnet sein. Die Vertiefung 27 ist frontseitig durch das Außenblech 18 vollständig abgedeckt.

Zur einfachen Zugänglichkeit kann vorgesehen sein, dass das Außenblech 18 zerstörungsfrei lösbar, beispielsweise durch Magnete an dem Vakuumisolationselement 8 gehalten ist. In dem Zusammenhang kann das Außenblech mit im Vakuumisolationselement 8 angeordneten Haltemagneten wechselwirken.

Bei einer gemäß den Vertiefungen 23 und 25 vorgesehenen Ausgestaltung kann der Ausschnitt bzw. die Aussparungen 21 und 22 so gestaltet sein, dass sie flächenmäßig etwas kleiner sind als die Vertiefungen 23 und 25. Durch einen derartigen Frontflansch kann auch durch die auenseitige Abdeckung 18 eine frontseitige Haltefunktion für das Funktionsbauteil 24 und/oder 26 gebildet sein. Dadurch kann das Funktionsbauteil 24 und/oder 26 in alle drei Raumrichtungen positionsfixiert gehalten in der Vertiefung 23 bzw. 25 angeordnet werden.

Gemäß der vergrößerten Darstellung eines Teilausschnitts des Vakuumisolationselements 8 in Fig. 5 ist zu erkennen, dass die Vertiefung 23 begrenzende Wände 23a, 23b, 23c, 23d und 23e einstückig mit der Außenschale 11 ausgebildet sind. Beispielsweise kann die Außenschale 11 durch ein Tiefziehen oder ein Spritzgießen hergestellt sein.

Bevorzugt ist zumindest eine Vertiefung 23, 25, 27, insbesondere alle Vertiefungen 23, 25, 27 in Tiefenrichtung und somit in z-Richtung so dimensioniert, dass die Innenschale 10 unverformt bleibt. Dies bedeutet, dass sich die Vertiefung 23, 25, 27 nicht über die Dicke des Vakuumisolationselements 8 erstreckt und somit keine Bauraumvertiefung durch eine überdimensionierte Vertiefung auftritt. Die Tiefe einer Vertiefung 23, 25 und 27 ist somit kleiner als eine in z-Richtung bemessene Dicke des Vakuumisolationselements 8.

Die Tür 5 ist als Vollvakuumtür ausgebildet.

### Bezugszeichenliste

- 1: Haushaltskältegerät
- 2: Gehäuse
- 3: Außengehäuse
- 4: Innengehäuse
- 4a, 4b: Seitliche Wandungen
- 4c: Hintere Wandung
- 4d: Bodenwandung
- 4e: Deckenwandung
- 5: Tür
- 6: Innenraum
- 7: Innenseite
- 8: Vakuumisolationselement
- 8a: Umfangsrand
- 9: Trägerrahmen
- 10: Innenschale
- 11: Außenschale
- 12: Stützkörper
- 13: Dichtung
- 14, 15, 16, 17: Trägerrahmenteile
- 18: Abdeckung
- 19: Hülle
- 20: Frontseite
- 21: Aussparung
- 22: Aussparung
- 23: Vertiefung
- 23a, 23b, 23c, 23d, 23e: Wände
- 24: Funktionsbauteil
- 25: Vertiefung
- 26: Funktionsbauteil
- 27: Vertiefung

## Patentansprüche

1. Tür (5) für ein Haushaltskältegerät (1), mit einem Vakuumisolationselement (8), welches eine Hülle (19) aufweist, die einen evakuierten Hohlraum umschließt, welcher zumindest teilweise mit einem Stützkörper (12) gefüllt ist, wobei die Hülle (19) zumindest eine Vertiefung (23, 25, 27) aufweist, in welcher zumindest ein Funktionsbauteil (24, 26) angeordnet ist, wobei zumindest eine Vertiefung (23, 25, 27) an einer einem Frontteil (18) der Tür (5) zugewandten Außenseite (8b) des Vakuumisolationselements (8) ausgebildet ist und die Vertiefung (23, 25, 27) durch das Frontteil (18) vollständig abgedeckt ist, **dadurch gekennzeichnet, dass** die Tür (5) eine Vollvakuumtür ist und dass das Frontteil eine Abdeckung (18) als Außenblech ist und dass das Frontteil (18) zerstörungsfrei lösbar mit dem Vakuumisolationselement (8) verbunden ist, insbesondere über Magnetkraft verbunden ist.

2. Tür (5) nach Anspruch 1, **dadurch gekennzeichnet, dass** das Funktionsbauteil (24, 26) ein elektrisches Kabel und/oder eine Leitung zum Leiten von flüssigen oder gasförmigen Medien und/oder eine Energiequelle ist und/oder ein Magnet ist.

3. Tür (5) nach einem der vorhergehenden Ansprüche, **dadurch gekennzeichnet, dass** die Vertiefung (23, 25, 27) begrenzende Wände (23a bis 23e) an einer Innenschale (10) und/oder einer Außenschale (11) des Vakuumisolationselements (8) angeordnet sind, insbesondere einstückig damit ausgebildet sind.

4. Tür (5) nach einem der vorhergehenden Ansprüche, **dadurch gekennzeichnet, dass** die Vertiefung (23, 25, 27) eine Tiefe (z-Richtung) aufweist, die kleiner als die Dicke des Vakuumisolationselements (8) ist.

5. Haushaltskältegerät (1) mit einer Tür (5) nach einem der vorhergehenden Ansprüche, welche zum Verschließen eines Innenraums (6) des Haushaltskältegeräts (1) angeordnet ist, wobei das Frontteil (18) dem Innenraum (6) abgewandt angeordnet ist.

## Claims

1. Door (5) for a household refrigeration appliance (1), with a vacuum insulation element (8), which has a covering (19) which surrounds an evacuated cavity, which is filled at least partially with a supporting body (12), wherein the covering (19) has at least one indentation (23, 25, 27), in which at least one functional component (24, 26) is arranged, wherein at least one indentation (23, 25, 27) is embodied on an outer face (8b) of the vacuum insulation element (8) which faces a front piece (18) of the door (5) and the indentation (23, 25, 27) is covered entirely by the front piece (18), **characterised in that** the door (5) is a fully vacuum door and that the front piece is a cover (18) as an exterior plate and that the front piece (18) is connected in a non-destructive detachable manner to the vacuum insulation element (8), in particular connected by way of magnetic force.

2. Door (5) according to claim 1, **characterised in that** the functional component (24, 26) is an electric cable and/or a line to guide liquid or gaseous media and/or is an energy source and/or a magnet.

3. Door (5) according to one of the preceding claims, **characterised in that** walls (23a to 23e) bounding the indentation (23, 25, 27) are arranged on an inner shell (10) and/or an outer shell (11) of the vacuum insulation element (8), embodied in particular in one piece therewith.

4. Door (5) according to one of the preceding claims, **characterised in that** the indentation (23, 25, 27) has a depth (z-direction), which is smaller than the thickness of the vacuum insulation element (8).

5. Household refrigeration appliance (1) with a door (5) according to one of the preceding claims, which is arranged to close an interior (6) of the household refrigeration appliance (1), wherein the front piece (18) is arranged so as to face away from the interior (6).

## Revendications

1. Porte (5) pour un appareil frigorifique (1) à usage domestique, comprenant un élément d'isolation sous vide (8) lequel présente une enveloppe (19) qui entoure un espace creux évacué lequel est rempli au moins en partie avec un corps de soutien (12), l'enveloppe (19) présentant au moins un approfondissement (23, 25, 27) dans lequel est disposé au moins un composant fonctionnel (24, 26), au moins un approfondissement (23, 25, 27) étant réalisé sur un côté extérieur (8b) de l'élément d'isolation sous vide (8), tourné vers une partie frontale (18) de la porte (5) et l'approfondissement (23, 25, 27) étant complètement recouvert par la partie frontale (18), **caractérisée en ce que** la porte (5) est une porte à vide total et **en ce que** la partie frontale est un recouvrement (18) en tant que tôle extérieure et **en ce que** la partie frontale (18) est reliée à l'élément d'isolation sous vide (8) de manière amovible non destructive, notamment par l'intermédiaire de force magnétique.

2. Porte (5) selon la revendication 1, **caractérisée en ce que** le composant fonctionnel (24, 26) est un câble électrique et/ou une ligne destinée à conduire des milieux liquides ou gazeux et/ou une source d'énergie et/ou un aimant.

3. Porte (5) selon l'une quelconque des revendications précédentes, **caractérisée en ce que** des parois (23a à 23e) délimitant l'approfondissement (23, 25, 27) sont disposées sur une coque intérieure (10) et/ou sur une coque extérieure (11) de l'élément d'isolation sous vide (8), notamment **en ce qu'**elles sont réalisées d'une seule pièce avec celles-ci.

4. Porte (5) selon l'une quelconque des revendications précédentes, **caractérisée en ce que** l'approfondissement (23, 25, 27) présente une profondeur (direction z) qui est plus petite que l'épaisseur de l'élément d'isolation sous vide (8).

5. Appareil frigorifique (1) à usage domestique comprenant une porte (5) selon l'une quelconque des revendications précédentes, laquelle est disposée pour fermer un espace intérieur (6) de l'appareil frigorifique (1) à usage domestique, la partie frontale (18) étant disposée de manière détournée de l'espace intérieur (6).
